Europäisches Patentamt

European Patent Office

Office européen des brevets

(19)

(11) Veröffentlichungsnummer : **0 045 378**
**B1**

(12) EUROPÄISCHE PATENTSCHRIFT

(45) Veröffentlichungstag der Patentschrift :
23.05.84

(51) Int. Cl.³ : **F 01 M 11/04**

(21) Anmeldenummer : 81105079.8

(22) Anmeldetag : 01.07.81

(54) Ölablass- und Ölauffangvorrichtung.

(30) Priorität : 31.07.80 US 174007

(43) Veröffentlichungstag der Anmeldung :
10.02.82 Patentblatt 82/06

(45) Bekanntmachung des Hinweises auf die Patenterteilung : 23.05.84 Patentblatt 84/21

(84) Benannte Vertragsstaaten :
AT BE CH DE FR GB IT LI NL SE

(56) Entgegenhaltungen :
DE-A- 2 918 204
FR-A- 1 416 483
FR-A- 2 029 242
GB-A- 1 256 419
GB-A- 2 009 874
US-A- 4 099 598

(73) Patentinhaber : **Berger, Jürgen**
**Triefenbergweg 19 a**
**D-6229 Schlangenbad 5 (DE)**

(72) Erfinder : **Berger, Jürgen**
**Triefenbergweg 19 a**
**D-6229 Schlangenbad 5 (DE)**

(74) Vertreter : **Blumbach Weser Bergen Kramer Zwirner**
**Hoffmann Patentanwälte**
**Sonnenbergerstrasse 43**
**D-6200 Wiesbaden 1 (DE)**

## Beschreibung

Die Erfindung bezieht sich auf eine Ölablaß- und Ölauffangvorrichtung für Kraftfahrzeuge mit Ölwanne und verschließbarer Ölwannenablaßeinrichtung.

Bei einer bekannten Ölablaß- und Ölauffangvorrichtung (GB-A-2 009 874 bzw. DE-A-27 54 348) ist ein Behälter zum Aufstecken eines Verbindungsschlauchs vorgesehen; der Verbindungsschlauch weist an seinem freien, vorderen Ende einen Entnahmerohrstutzen auf; die Ölwannenablaßeinrichtung besteht aus einer Ölablaßschraube, die einen Ölablaßkanal und nebst einer Ausführungsform mit Kugelventil eine den Ölablaßkanal verschließende Querwand aufweist, welche durch den Entnahmerohrstutzen durchstoßbar ist. Durch diese Maßnahme kann der Ölwechsel bequemer und sicherer — ohne die Gefahr des Verschüttens von Altöl — gehandhabt werden. Die vorgeschlagene Lösung ist aber darin nicht perfekt, daß Kraftfahrzeuge unterschiedlichen Typs unterschiedliche Ölablaßschrauben aufweisen, so daß für jede Größe von Ölablaßschraube eine passende Ersatzschraube bereitgestellt werden müßte.

Der Erfindung liegt deshalb die aufgabe zugrunde, die Ölablaß- und Ölauffangvorrichtung dahingehend zu verbessern, daß mit dem Kauf eines Gefindes (Behälter mit Frischöl, Verbindungsschlauch mit Entnahmerohrstutzen und Ölablaßschraube) die Voraussetzungen für einen bequemen Ölwechsel gegeben sind.

Die gestellte Aufgabe wird durch folgende Maßnahmen gelöst: Die Querwand wird durch einen in die Ölablaßschraube einsetzbaren und austauschbaren Napf gebildet, der eine Membran mit Sollbruchstelle und eine Rasteinrichtung aufweist; der Ölablaßkanal ist zur einrastenden Aufnahme des Napfs ausgebildet.

Bei dem neuartigen Ölwechselsystem wird die fabrikmäßig gelieferte Ölablaßschraube durch eine spezielle, mit einer Längsbohrung versehenen Ölablaßschraube ersetzt, wobei die Längsbohrung als Ölablaßkanal und zur Aufnahme des Napfs aus Kunststoff ausgebildet ist. Beim Ölwechsel dient der Kunststoffnapf zur Führung und Abdichtung des Entnahmerohrstutzens, so daß kein Altöl verschüttet wird. Nach dem Ölwechsel wird der zerstörte Kunststoffnapf aus dem Ölablaßkanal der Ölablaßschraube herausgezogen und durch einen neuen Kunststoffnapf ersetzt. Die zur Leferung von Frischöl vorgesehenen Behälter werden nach ihrer Entleerung zur Aufnahme des Altöls benutzt. Es können aber auch die in Garagen vorhandenen Altölauffangvorrichtungen verwendet werden, zumal das Ablassen des Altöls mit dem Entnahmerohrstutzen und dem Verbindungsschlauch sehr bequem und ohne Verschüttungsgefahr vor sich geht.

Als Rasteinrichtung ist am Kunststoffnapf vorzugsweise ein die durchstoßbare Membran umgebender Ringkragen vorgesehen, und die Ölablaßschraube weist eine ringförmige Nut des Ölablaßkanals auf. Wenn der Kunststoffnapf demnach in den Ölablaßkanal hineingetrieben wird, rastet der Ringkragen in der ringförmigen Nut ein und wird dort unverlierbar gehalten. An dem Ringkragen kann ein Dichtmittel angebracht sein, welches bei Einwirkung von Öl klebfähig wird. Ein derartiges Dichtmittel ist aus dem Motorenbau bekannt.

Um den zerstörten Kunststoffnapf aus dem Ölablaßkanal herauszuziehen, ist im Kunststoffnapf vorzugsweise eine nach innen gerichtete Rippe vorgesehen, an welcher ein Ausziehwerkzeug angreifen kann. Dieses Ausziehwerkzeug kann auch Teil des Entnahmerohrstutzens sein.

Ein Ausführungsbeispiel der Erfindung wird nachfolgend anhand der Zeichnungen beschrieben. Dabei zeigt:

Figur 1 einen Behälter zur Lieferung von Frischöl und zum Auffangen von Altöl, teilweise aufgebrochen;

Figur 2 eine Ausgußeinrichtung aus Fig. 1 in vergrößerter Darstellung und geschnitten;

Figur 3 einen Verbindungsschlauch mit Entnahmerohrstutzen;

Figur 4 eine Variante der Ausgußeinrichtung;

Figur 5 eine Ölablaßschraube im Schnitt;

Figur 6 eine vergrößerte Einzelheit gemäß Schnitt VI-VI in Fig. 5;

Figur 7 ein Ausziehwerkzeug;

Figur 8 eine Variante des Entnahmerohrstutzens;

Figur 9 eine weitere Variante des Entnahmerohrstutzens;

Figur 10 eine mögliche Einzelheit hiervon.

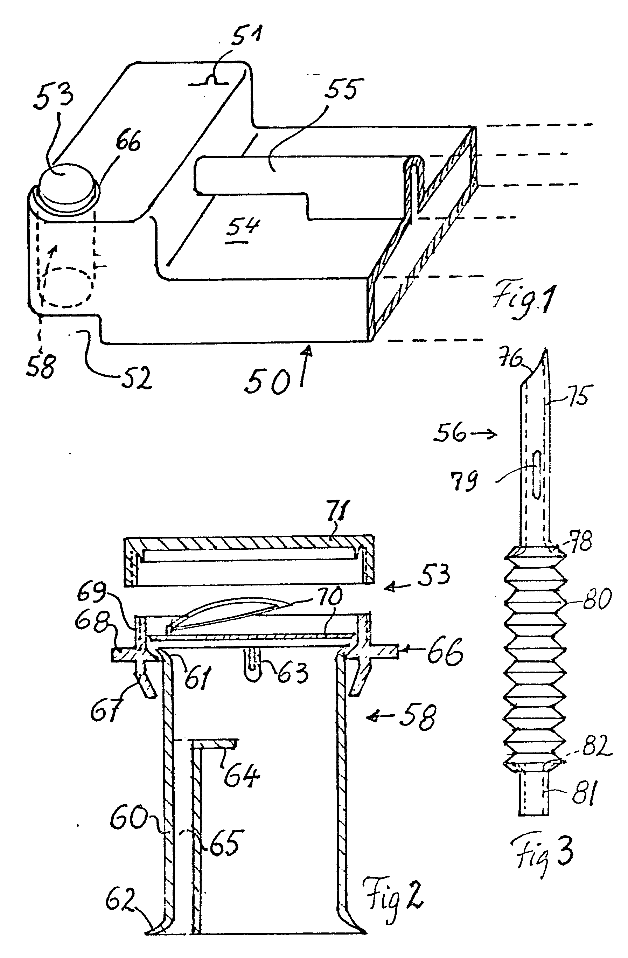

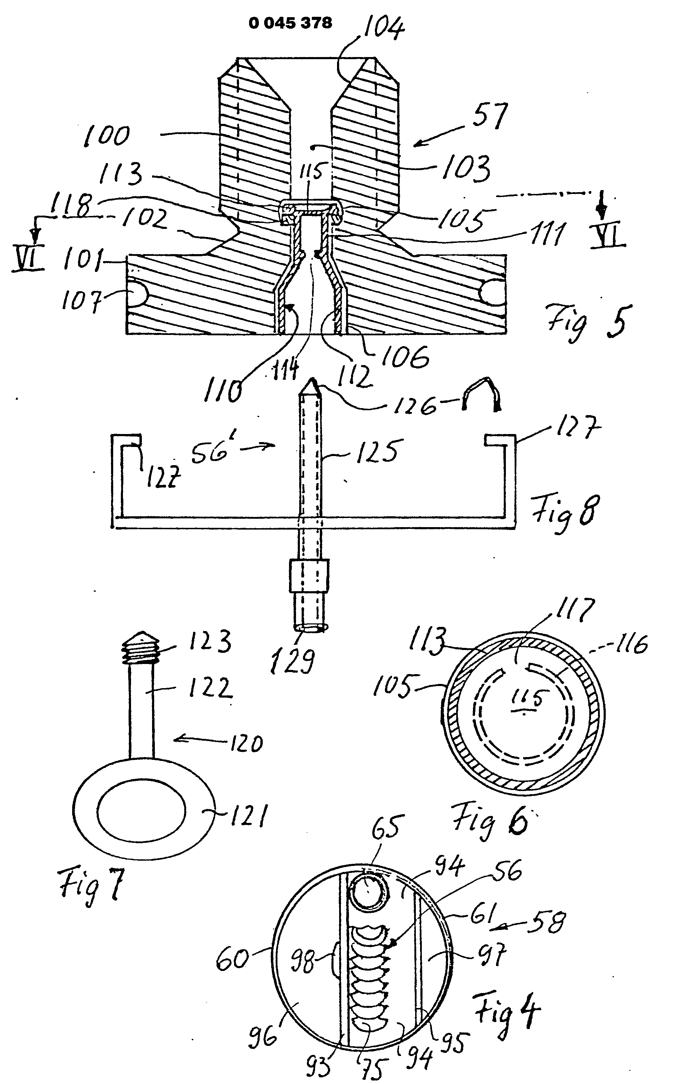

Ein Behälter 50 (Fig. 1) von im wesentlichen quaderförmig flacher und länglicher Gestalt dient zunächst zur Aufnahme von Frischöl und nach dessen Verbrauch zum Auffangen von Altöl. Die Behälter 50 sind stapelbar ausgebildet und weisen zu diesem Zweck Rutschsicherungen 51 auf, die aus Noppen und Dellen in der Behälterwandung bestehen. Innerhalb des allgemeinen Umrisses des Behälters ist an einer abgerundeten Ecke eine Einsenkung 52 vorgesehen, die so groß ist, daß ein Verschluß 53 des darunter gestapelten Behälters Platz hat. Der Behälter weist eine Griffmulde 54 zum Unterbringen eines Griffes 55 auf. Im Bereich der Griffmulde 54 kann ein Entnahmerohrstutzen 56 (Fig. 3) und eine Ölablaßschraube 57 (Fig. 5) untergebracht und mitgeliefert werden.

Fig. 2 zeigt die näheren Einzelheiten des Verschlusses 53 sowie eine Ausgußeinrichtung 58. Es ist ein rohrförmiger Körper 60 mit einem oberen Flansch 61 und einem unteren Flansch 62 vorgesehen, der in seinem Inneren eine Griffleiste 63, eine Querwand 64 und ein kleines Rohr 65 beherbergt. Die Griffleiste 63 überspannt das Rohrinnere im Bereich nahe des Durchmessers. Die Querwand 64 ist auf etwa 2/3 des rohrförmigen Körpers 60 vorgesehen und reicht bis nahe der Rohrmitte. Die Wandung des kleinen Rohrs 65 geht von der Wandung des rohrartigen Körpers 60 aus, d. h. das Innere des kleinen Rohrs 65 läuft parallel neben der Wandung des Rohres 60 und durchdringt die Querwand 64. Der rohrförmige Körper 60 wird von einem Abdichtring 66 umgeben, der einen Dichtkonus 67, einen Flansch 68, eine Verschraubung 69 und eine Aufreißmembran 70 aufweist. Der Konus 67 ist in eine entsprechende Öffnung des Behälters 50 dichtend eingepreßt, wobei der Flansch 68 auf der Oberfläche des Behälters 50 zu liegen kommt. Der Flansch 68 erstreckt sich auch ein wenig radial nach innen und hintergreift den Flansch 61 des rohrförmigen Körpers 60. Der Innendurchmesser des Flansches 68 entspricht dem Außendurchmesser des rohrförmigen Körpers 60, so daß diese axial gegeneinander verschoben werden können, sobald die Aufreißmembran 70 entfernt worden ist. In diesem Fall kann der rohrartige Körper 60 an der Griffleiste 63 erfaßt und nach oben gezogen werden, bis der Flansch 62 an der radial inneren Fortsetzung des Flansches 68 anliegt. Der rohrartige Körper 66 läßt sich natürlich auch wieder in die in Fig. 2 dargestellte Lage zurückschieben. Ein Schraubdeckel 71 sorgt für einen Verschluß zusätzlich oder anstelle der Aufreißmembran 70.

Fig. 3 zeigt die näheren Einzelheiten des Entnahmerohrstutzens 56. Dieser enthält ein etwa 5 bis 10 cm langes, dünnes Rohr 75, vorzugsweise aus Metall. Das Ende des Rohrs 75 ist als parabelastartige Schneide 76 ausgebildet. Das andere Ende des Rohrs 75 weist einen Flansch 78 auf. Am Rohr kann noch ein flügelartiger Griff 79 vorgesehen sein. Ein balgartiger Schlauch 80 ist mit seinem oberen Ende auf den Flansch 78 des Rohrs 75 gesteckt, während am unteren Ende ein kurzes metallisches Rohrstück 81 mit Flansch 82 eingesteckt ist. Der Außendurchmesser des Rohrstücks 81 ist passend zum Innendurchmesser des kleinen Rohrs 65 gewählt, so daß der Entnahmerohrstutzen 56 mit dem Rohrstück 81 in das kleine Rohr 65 hineingesteckt werden kann, und zwar nachdem die Aufreißmembran 70 entfernt worden ist.

Fig. 4 zeigt eine abgewandelte Ausgußeinrichtung 58' von oben, bei welcher der Entnahmerohrstutzen 56 in das Rohr 65 bereits fabrikmäßig eingesteckt geliefert werden kann. Anstelle der Querwand 64 ist eine Bodenwand 94 in der Nähe des Flansches 62 vorgesehen, die von zwei achsparallelen Trennwänden 93, 95 flankiert wird, welche sich achsparallel durch das Innere des rohrförmigen Körpers 60 zwischen den beiden Flanschen 61 und 62 erstrecken. Auf diese Weise wird ein großer Ölausguß-Durchlaß 96 und ein kleiner Luftnachström-Durchlaß 97 gebildet. Die Trennwand 93 weist eine Griffeinrichtung 98 auf, die als Aussparung oder als Vorsprung ausgebildet sein kann und das Hintergreifen durch einen oder mehrere Finger ermöglicht. Auf diese Weise kann der rohrförmige Körper 60 in schon beschriebener Weise relativ zum Ring 66 verschoben werden. Der Entnahmerohrstutzen 56 wird fabrikmäßig auf das Rohr 65 gesteckt und kann in der nun zu beschreibenden Weise verwendet werden.

Fig. 5 zeigt die Ölablaßschraube 57. Diese enthält in üblicher Weise einen Schraubteil 100, einen Sechskantteil 101 und einen Verbindungskonus 102, mit Abmessungen, wie es dem jeweiligen Motortyp entspricht. Als Besonderheit ist ein Ölablaßkanal 103 vorgesehen, der im Schraubenteil 100 mit einem trichterförmigen Teil 104 beginnt und in seinem mittleren Teil eine Ringnut 105 aufweist. Das untere Ende des Ölablaßkanals 103 kann ausgeweitet sein, wie bei 106 dargestellt. Am Umfang des Sechskantteils 101 kann eine Ringnut 107 bzw. Stücke einer solchen Ringnut vorgesehen sein. Innerhalb des Ölablaßkanals 103 ist ein Kunststoffnapf 110 vorgesehen, der äußerlich eine flaschenartige Form mit Hals 111 und trichterartigem Bauch 112 aufweist. Am oberen Ende des Halses 111 ist ein Ringkragen 113 und im Innern sind eine oder mehrere nach innen reichende Rippen 114 vorgesehen. Am oberen Ende ist der Napf durch eine Membran 115 verschlossen, die eine ringspangenartige Sollbruchstelle 116 (Fig. 6) aufweist. Die Sollbruchstelle 116 kann durch eine kleine Vertiefung in der Membran gebildet werden. Wie dargestellt, ist die Sollbruchstelle nicht in sich geschlossen, sondern es verbleibt ein Steg 117, so daß beim Aufreißen der Membran 105 der mittlere Membranteil deckelartig aufklappt, aber nicht abreißt. Der Durchmesser des Kunststoffnapfs 110 beträgt etwa 8 bis 10 mm, die Länge etwa 12 mm.

Der Kunststoffnapf 110 wird in den Ölablaßkanal 103 eingepreßt, wobei der Ringkragen 113 in die Ringnut 105 einrastet. Am Ringkragen 113 kann ein Dichtring 118 angebracht sein, der aus einem Dichtmittel besteht, wie es aus dem Motorenbau bekannt ist und bei der Einwirkung durch Öl klebrig wird.

Die Ölablaß- und Ölauffangvorrichtung gemäß Erfindung wird wie folgt angewendet :

Nach Lösen des Schraubdeckels 71 wird die Aufreißmembran 70 entfernt, so daß das im Behälter 50 befindliche Frischöl in die Ölwanne des zu versorgenden Motors gegossen werden kann. Sobald der Behälter 50 leer ist, steht er zur Aufnahme von Altöl zur Verfügung. Hierzu wird der Entnahmerohrstutzen 56 und der Schlauch 80 mit dem Ende 81 in das Rohr 65 der Ausgußeinrichtung 58 gesteckt, und der rohrförmige Körper 60 wird mittels der Griffleiste 63 soweit angehoben, wie dies zum Einstecken des vorderen Endes des Entnahmerohrstutzens 56 in die Ölablaßschraube 57 passend ist. Bekanntlich ist die Ölablaßschraube am Boden der Ölwanne des Fahrzeugs angebracht, und die Bodenfreiheit zwischen Ölablaßschraube und Straße ist bei den unterschiedlichen Fahrzeugtypen unterschiedlich. Diese Unterschiede lassen sich dadurch ausgleichen, daß der rohrartige Körper 60 mehr oder weniger weit herausgezogen wird und daß der etwa 6 bis 12 cm lange Entnahmerohrstutzen 56 infolge des balgartigen Schlauches 80 auf größere Länge gezogen werden kann oder durch Krümmen im Schlauch 80 verkürzt werden kann. Wenn die Schneide 76 die Sollbruchstelle 116 erreicht, reißt die Membran 115 auf und wird deckelartig aufgeklappt, wobei die Verbindung über den Steg 117 erhalten bleibt. Der flügelartige Griff 79 kann dabei als Anschlag auf der Unterseite des Sechskantteils 101 dienen. Die Sollbruchstelle 116 ist so bemessen, daß sie sich dichtend um das vordere Ende des Entnahmerohrstutzens 56 legt. Das im Ölablaßkanal 103 stehende Öl läuft deshalb nur über das Innere des Entnahmerohrstutzens 56 und den Schlauch 80 in das Rohr 65 und von dort in den Behälter 50.

Die erfindungsgemäße Ölablaß- und Ölauffangvorrichtung kombiniert somit die Lieferung von Frischöl mit der sicheren Beseitigung von Altöl ohne Verschütten. Der Kauf von Frischöl kann mit der Abgabe von Altöl gekoppelt sein (Pfandsystem). Auf diese Weise wird ein Anreiz zur Ablieferung und ordnungsgemäßen Beseitigung von Altöl geschaffen.

Vor dem Einfüllen von Frischöl wird der zerstörte Kunststoffnapf 110 durch einen neuen ersetzt. Fig. 7 zeigt ein Ausziehwerkzeug 120. Dieses besteht aus einem Griff 121 und einem Stiel 122, dessen Ende als Schraube 123 ausgebildet ist. Die Schraube 123 wird in die Rippe 114 des Kunststoffnapfs 110 hineingeschraubt, so daß dieser aus seiner Verrastung bei 105 herausgerissen werden kann. Die Rippe 114 kann aus Teilstücken oder Restinseln eines Gewindestegs bestehen, in welche die Schraube 121 hineinpaßt, es ist aber auch möglich, die Schraube 123 scharfkantig auszubilden, so daß diese sich ihr Haltegewinde selbst schneidet.

Wenn der Ölablaßkanal 103 freigemacht ist, kann ein neuer Kunststoffnapf 110 eingesetzt werden. Hierzu genügt ein Druck oder Schlag mit einem flachen Gegenstand auf die Unterseite des Kunststoffnapfes 110.

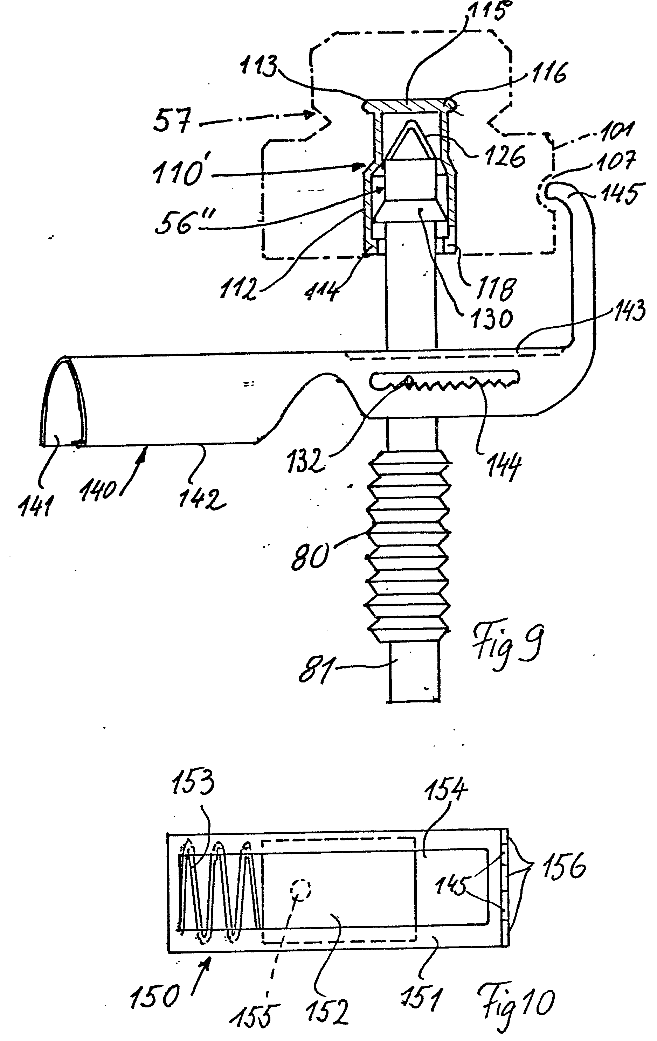

Fig. 8 zeigt einen abgewandelten Entnahmerohrstutzen 56'. Dieser besteht aus einem Rohr 125, dessen Ende von einem Schneidbügel 126 überspannt wird. Der Schneidbügel 126 kann mit seinen Enden im Inneren des Rohrs 125 angelötet sein, es kann sich aber auch um ein stehengebliebenes und hochgebogenes Wandteil des Rohrs 125 handeln. Am Entnahmerohrstutzen 56' sind eine oder mehrere Haltekrallen 127 vorgesehen, die in die Nut oder Nutstücke 107 des Sechskantteils 101 einrasten und den Entnahmerohrstutzen 56' gegen Zug halten. Ein solcher Zug tritt auf, wenn ein längerer Verbindungsschlauch 129 zu einem nicht dargestellten Ölauffangbehälter vorgesehen ist, der beispielsweise die Altöltonne einer Tankstelle oder Reparaturwerkstatt sein kann.

Bekanntlich sind die Abmessungen der Ölablaßschrauben bei den unterschiedlichen Fahrzeugmarken und Motortypen unterschiedlich groß. Damit aber immer ein und dieselbe Größe des Kunststoffnapfes 110 verwendet werden kann, wird der Ölablaßkanal 103 in allen Größen der Ölablaßschraube gleich groß gemacht. Als Material des Kunststoffnapfs 110 wird zur Zeit Polytetrafluoräthylen bevorzugt, es kommt aber auch Metall, insbesondere Aluminium, in Betracht.

Zum Einrasten des Kunststoffnapfes 110 weist dieser einen Ringkragen 113 und der Ölablaßkanal 103 eine Ringnut 105 auf ; die Verhältnisse können aber gerade umgekehrt sein, es könnte im Ölablaßkanal ein Ringsteg und im Kunststoffnapf 110 eine ringförmige Einbuchtung vorgesehen sein, um zur gleichen Rastwirkung zu gelangen.

Die Rippe 114 ist als Ring dargestellt, es ist aber auch möglich, daß sich einzelne Rippenstücke im Innern in Achsrichtung erstrecken, da sich dann auch die scharfkantige Schraube 123 in die Rippenwandung eingraben würde, so daß der Kunststoffnapf 110 aus dem Ölablaßkanal 103 herausgezogen werden kann.

Fig. 9 zeigt eine Variante des austauschbaren Kunststoffnapfes 110' und des Entnahmerohrstutzens 56". Mit früheren Ausführungsformen funktionsgleiche Teile sind mit den entsprechenden Bezugsziffern versehen. Die Rippen 114 des Napfes 110' sind nicht am Hals, sondern am unteren Ende des Napfs angebracht, und der Entnahmerohrstutzen 56" ist gleichzeitig als Ausziehwerkzeug ausgebildet. Zu diesem Zweck weist der Kunststoffnapf 110' mehrere, beispielsweise vier Schlitze 118 auf, wodurch der trichterförmige Bauch 112 in radialer Richtung federnd ausweichen kann, wenn der Entnahmerohrstutzen 56" eingeführt wird. Dieser weist nämlich einen widerhaken-förmigen Ringkragen 130 von kegelstumpfförmiger Ausbildung auf, der die Rippen 114 auseinanderschiebt und sich hinter diese legt, wenn der Entnahmerohrstutzen nach Beendigung des Altölablaufs aus dem Ölablaßkanal der Ölablaßschraube 100 zurückgezogen wird. Dabei wird der Kunststoffnapf 110' mit herausgerissen und kann danach durch einen neuen ersetzt werden.

Wenn der Entnahmerohrstutzen einen Schneidbügel 126, wie in Fig. 8 und 9 dargestellt, aufweist, kann man statt eines flügelartigen Griffs 79 (Fig. 3) auch einen teller- oder scheibenartigen Griff verwenden, der sich ringkragenförmig um den Entnahmerohrstutzen erstreckt und eine Anlage für die Hand beim Durchstoßen der Membran 115 bietet.

Es ist aber auch möglich, einen Hebel 140 zur Verschiebung des Entnahmerohrstutzens 56" zu benutzen. Zu diesem Zweck weist der Entnahmerohrstutzen 56" zwei sich diametral gegenüberstehende Stifte 132 auf. Der Hebel 140 weist zwei Wangen 141 und 142 auf, bestehend aus einem gebogenen Blech mit parabelförmigem Querschnitt. Am Scheitel der Parabel ist eine schlitzförmige Aussparung 143 vorgesehen, durch welche der Entnahmerohrstutzen 56" hindurchreicht. In den Wangen 141 und 142 sind ferner Rastschlitze 144 vorgesehen, deren einer Rand mit Zähnen versehen ist, damit sich die Stifte 132 zwischen die Zahnlücken legen können. Der Hebel 140 besitzt ein hakenförmiges Ende 145, welches zum Eingriff in die Nut 107 der Ölablaßschraube 57 ausgebildet ist.

Wenn der Hebel 140 in Fig. 9 nach oben bewegt wird, durchstößt der Schneidbügel 126 die Membran 115, und wenn der Hebel 140 nach unten bewegt wird, wird der Kunststoffnapf 110' aus seiner Verankerung in der Ölablaßschraube 57 herausgerissen. Bei diesen Arbeiten stützt sich der Hebel 140 mit seinem hakenartigen Ende 145 in der Nut 107 der Ölablaßschraube 57 ab. Nach getaner Arbeit wird der unbrauchbare Kunststoffnapf 110' vom vorderen Ende des Entnahmerohrstutzens 56'' abgenommen. Die Teile 80, 81 des Geräts können raumsparend zwischen die Wangen 141, 142 des Hebels 140 hineingeschwenkt werden.

Fig. 10 zeigt einen Greifer 150 zum Umfassen des Kopfes 101 einer Ölablaßschraube, wobei die Darstellung gegenüber Fig. 9 verkleinert ist. Der Greifer 150 besteht aus einem Rahmen 151, einem darin geführten Schieber 152 und einer Feder 153, welche den Schieber 152 in der Zeichnung nach rechts zu drängen versucht. Dadurch wird der Schraubenkopf 101 in dem verbleibenden Raum 154 umfaßt, wobei die Ränder des Rahmens 151 und des Schiebers 152 in die Nut 107 des Schraubkopfs 101 eingreifen. Ein Stift 155, der an der Unterseite des Schiebers 152 befestigt ist, dient als Handhabe zum Zurückziehen des Schiebers 152 und Freigabe des Schraubkopfs 101. Ein Scharnier 156 ist zur Verbindung des Greifers 150 mit dem Hebel 140 vorgesehen, und zwar an dessen Ende 145.

Die Wirkungsweise und Handhabung des Geräts 140/150 ist ähnlich der Handhabung des Hebels 140 allein und bedarf keiner näheren Erläuterung.

Die Erfindung kann außer bei den Motoren von Autos auch bei Bootsmotoren und dergleichen angewendet werden. In jedem Fall führt die Erfindung zu einem sauberen Ölwechsel, ohne der Gefahr des Verschüttens von Altöl zu unterliegen.

## Ansprüche

1. Ölablaß- und Ölauffangvorrichtung für Kraftfahrzeuge mit Ölwanne und verschließbarer Ölwannenablaßeinrichtung, mit folgenden Merkmalen :

a) es ist ein Behälter (50) zum Aufstecken eines Verbindungsschlauchs (80) vorgesehen ;

b) der Verbindungsschlauch weist an seinem freien vorderen Ende einen Entnahmerohrstutzen (56, 56', 56'') auf ;

c) die Ölwannenablaßeinrichtung besteht aus einer Ölablaßschraube (57), die einen Ölablaßkanal (103) und eine diesen verschließende Querwand aufweist, welche durch den Entnahmerohrstutzen (56, 56', 56'') durchstoßbar ist ;

gekennzeichnet durch

d) die Querwand wird durch einen in die Ölablaßschraube (57) einsetzbaren und austauschbaren Napf (110, 110') gebildet, der eine membran (115) mit Sollbruchstelle (116) und eine Rasteinrichtung (113) aufweist ;

e) der Ölablaßkanal (103) ist zur einrastenden Aufnahme des Kunststoffnapfs (110, 110') ausgebildet.

2. Ölablaß- und Ölauffangvorrichtung nach Anspruch 1, dadurch gekennzeichnet, daß als Rasteinrichtung des Napfs (110, 110') ein die durchstoßbare Membran (115) umgebender Ringkragen (113) vorgesehen ist und die Ölablaßschraube (57) eine ringförmige Nut (105) im Ölablaßkanal (103) aufweist.

3. Ölablaß- und Ölauffangvorrichtung nach Anspruch 1 oder 2, dadurch gekennzeichnet, daß der Napf (110) äußerlich eine flaschenartige Form mit Hals (111) und trichterartigem Bauch (112) aufweist.

4. Ölablaß- und Ölauffangvorrichtung nach einem der Ansprüche 1 bis 3, dadurch gekennzeichnet, daß der Napf (110, 110') eine nach innen gerichtete Rippe (114) aufweist, die zum erleichterten Entfernen des Napfs aus dem Ölablaßkanal (103) ausgebildet ist.

5. Ölablaß- und Ölauffangvorrichtung nach Anspruch 4, dadurch gekennzeichnet, daß ein an der Rippe (114) angreifendes Ausziehwerkzeug (120, 56'') vorgesehen ist.

6. Ölablaß- und Ölauffangvorrichtung nach Anspruch 5, dadurch gekennzeichnet, daß die Rippe (114) federnd am Napf (110') angebracht ist und daß das Ausziehwerkzeug einen widerhakenförmigen Ringkragen (130) aufweist, der am Entnahmerohrstutzen (56'') befestigt ist und diesen zum Ausziehwerkzeug des Napfes (110') gestaltet.

7. Ölablaß- und Ölauffangvorrichtung nach Anspruch 5, dadurch gekennzeichnet, daß das Ausziehwerkzeug (120) eine schneidende Schraube (123) aufweist.

8. Ölablaß- und Ölauffangvorrichtung nach Anspruch 1 bis 7, dadurch gekennzeichnet, daß der Entnahmerohrstutzen (56'') mit einem Hebel (140) gekoppelt ist, der ein Hebelende (145) zur Abstützung an der Ölablaßschraube (100) aufweist.

9. Ölablaß- und Ölauffangvorrichtung nach Anspruch 8, dadurch gekennzeichnet, daß am Hebelende (145) ein Greifer (150) angebracht ist.

10. Ölablaß- und Ölauffangvorrichtung nach einem der Ansprüche 1 bis 9, dadurch gekennzeichnet, daß der Behälter (50) flach, schmal und lang ausgebildet ist und in Rand- oder Eckennähe eine anhebbare Ausgußeinrichtung (58) aufweist, die mit einer Halteeinrichtung (65) für das Aufsteckende (81) des Verbindungsschlauchs (80) versehen ist.

11. Ölablaß- und Ölauffangvorrichtung nach einem der Ansprüche 1 bis 10, dadurch gekennzeichnet, daß der Napf (110, 110') aus Kunststoff besteht.

## Claims

1. A device for draining and collecting oil from motor vehicles, each having an oil sump and a closable oil sump draining means, comprising the following features :

a) a vessel (50) is provided for attaching a connecting hose (80),

b) the connecting hose, at its free forward end, has a spigot (56, 56', 56"),

c) the oil sump draining means comprises an oil drain plug (57) having an oil outlet passage (103) and a diaphragm closing same, which can be ruptured by the spigot (56, 56', 56"), characterized by :

d) the diaphragm is formed by a cup (110, 110'), which can be inserted into the plug (57) and replaced, and including a membrane (115) having a breaking line (116) and a locking means (113),

e) the oil outlet passage (103) is formed as to take up the cup (110, 110') in a snapping action.

2. A device according to claim 1, characterized in that, as a locking means of the cup (110, 110'), a collar (113) surrounding the rupturable membrane (115) and a groove (105) in the outlet passage (103) of the plug (57) are provided.

3. A device according to claim 1 or 2, characterized in that the cup (110) has the outer shape of a bottle having a neck (111) and a funnel-like body (112).

4. A device according to one of the claims 1 to 3, characterized in that the cup (110, 110') has a rip (114) extending inwardly and being formed as to remove the cup out of the outlet passage (103) easily.

5. A device according to claim 4, characterized in that a tool (120, 56") is provided to pull out the cup by engagement on the rip (114).

6. A device according to claim 5, characterized in that the rip (114) is resiliently fixed to the cup (110') and in that the tool has a barbed hook ring collar (130) fixed to the spigot (56") and making same to the pull out tool of the cup (110').

7. A device according to claim 5, characterized in that the pull out tool (120) comprises a cutting screw (123).

8. A device according to one of the claims 1 to 7, characterized in that the spigot (56") is connected to a lever (140) having a lever end (145) for engagement on the plug (100).

9. A device according to claim 8, characterized in that a gripper (150) is provided at the lever end (145).

10. A device according to one of the claims 1 to 9, characterized in that the vessel (50) is flat, narrow and long and has a spout means (58) near its end which can be lifted and has a holding means (65) for the attachment end (81) of the connecting hose (80).

11. A device according to one of the claims 1 to 10, characterized in that the cup (110, 110') is made up by plastic.

## Revendications

1. Dispositif de vidange et de collecte d'huile pour véhicules à moteur comportant un carter et une vanne de vidange susceptible d'être fermée, avec les dispositions ci-après :

a) il est prévu un récipient (50) propre à recevoir un tuyau de raccordement (80),

b) le tuyau de raccordement comporte à son extrémité amont libre une tubulure de vidange (56, 56', 56"),

c) le dispositif de canalisation de vidange d'huile est constitué par une vis (57) comportant un canal de sortie d'huile (103) ainsi qu'une paroi transversale qui obture celui-ci, cette paroi pouvant être perforée par la tubulure de vidange (56, 56', 56"), caractérisé en ce que :

d) la paroi transversale est constituée par un godet (110, 110') remplaçable susceptible d'être introduit dans la vis de vidange (57) et qui comporte une membrane (115) avec emplacement de rupture (116) ainsi qu'un dispositif d'enclenchement (113),

e) la canalisation de vidange (103) est établie pour recevoir à enclenchement le godet (110, 110') fait en matière plastique.

2. Dispositif de vidange et de collecte d'huile suivant la revendication 1, caractérisé en ce qu'il y est prévu en guise de dispositif d'enclenchement du godet (110, 110') une couronne annulaire (113) qui entoure la membrane perforable (115) et en ce que la vis de vidange (57) comporte une rainure circulaire (105) dans son canal (103).

3. Dispositif de vidange et de collecte d'huile suivant la revendication 1 ou 2, caractérisé en ce que le godet (110) présente extérieurement le profil d'un flacon avec goulot (111) et corps (112) en forme d'entonnoir.

4. Dispositif de vidange et de collecte d'huile suivant l'une des revendications 1 à 3, caractérisé en ce que le godet (110, 110') comporte une nervure (114) orientée vers l'intérieur et qui est établie pour faciliter l'enlèvement de ce godet à partir du canal (103) de vidange d'huile.

5. Dispositif de vidange et de collecte d'huile suivant la revendication 4, caractérisé en ce qu'il est prévu un outil d'arrachement (120, 56") qui vient en prise avec la nervure (114).

6. Dispositif de vidange et de collecte d'huile suivant la revendication 5, caractérisé en ce que la nervure (114) est rapportée élastiquement sur le godet (110') et en ce que l'outil d'arrachement de ce godet comporte une couronne annulaire (130) en forme de contre-crochet, laquelle est fixée à la tubulure de vidange (56") et qui adapte celle-ci à l'outil (110').

7. Dispositif de vidange et de collecte d'huile suivant la revendication 5, caractérisé en ce que l'outil d'arrachement (120) comporte une vis coupante (123).

8. Dispositif de vidange et de collecte d'huile suivant les revendications 1 à 7, caractérisé en ce que la tubulure de vidange (56") est accouplée à un levier (140) qui comporte une extrémité (145) destinée à prendre appui sur la vis de vidange (100).

9. Dispositif de vidange et de collecte d'huile suivant la revendication 8, caractérisé en ce qu'à l'extrémité (145) du levier (140) est rapportée une pince (150).

10. Dispositif de vidange et de collecte d'huile suivant l'une des revendications 1 à 9, caractérisé en ce que le récipient (50) est établi sous forme plate, étroite et allongée et comporte au voisinage de son bord ou de ses angles un dispositif de déversement relevable (58), lequel est prévu avec un dispositif de retenue (65) pour l'extrémité d'enfoncement du tuyau de raccordement (80).

11. Dispositif de vidange et de collecte d'huile suivant l'une des revendications 1 à 10, caractérisé en ce que le godet (110, 110') est fait en matière plastique.

51

53

66

55

54

58    52    50

*Fig.1*

76

56→

75

79

78

71

53

69

80

68

70

67    61    63    66

58

60

65    82

62    81

64

*Fig 2*

*Fig 3*

0 045 378

Fig 9

Fig 10